# EUROPEAN PATENT APPLICATION

(11) **EP 4 772 450 A1**
(43) Date of publication of application: **08.07.2026**
(21) Application number: 26150142.3
(22) Date of filing: 05.01.2026
(51) Int. Cl.: B65D 5/50, B65D 85/20

(54) **SUPPORT MEMBER AND PACKING MEMBER PROVIDED THEREWITH**

(30) Priority: 07.01.2025 JP 2025002421
(71) Applicant: Kyocera Document Solutions Inc., Osaka-shi, Osaka 540-8585 (JP)
(72) Inventor: ARIMURA, Shingo, Osaka, 540-8585 (JP)
(74) Representative: BRP Renaud & Partner mbB Rechtsanwälte Patentanwälte Steuerberater

(57) **Abstract**

A support member (8) of the present disclosure supports a bar-shaped packed article (6). The support member (8) has a first support portion (1) arranged adjacent to the packed article (6) in the longitudinal direction and a second support portion (3). The first support portion (1) has a first insertion portion (2) formed in it which is configured as a hole with an inner diameter equal to or larger than the outer diameter of the packed article (6). The second support portion (3) is arranged closer to an end of the packed article (6) than the first support portion (1) and has a second insertion portion (4) formed in it which is configured as two or more intersecting linear cuts.

## Description

### BACKGROUND

The present disclosure relates to a support member used to pack a bar-shaped packed article with enhanced vibration damping and stability during transportation, and to a packing member provided with such a support member.

For the packing of components of electrical appliances and precision instruments, support members are used to secure a packed article inside a packing member to prevent its vibration during transportation. Many inventions have been made in relation to their shape and material.

An object of the present disclosure is to provide a support member that achieves low cost due to its applicability to a wide range of packed articles and that excels in stability during transportation, and to provide a packing member provided with such a support member.

### SUMMARY

According to one configuration of the present disclosure, a support member supports a bar-shaped packed article. The support member has a first support portion arranged adjacent to the packed article in the longitudinal direction and a second support portion. The first support portion has a first insertion portion that is configured as a hole in which the packed article is inserted. The hole in the first support portion has an inner diameter equal to or larger than the outer diameter of the packed article. The second support portion has a second insertion portion that is configured as two or more intersecting linear cuts in which the packed article is inserted.

### BRIEF DESCRIPTION OF THE DRAWINGS

Fig. 1 is a development view of a support member 8 according to one embodiment of the invention.
Fig. 2 is a front view of a first support portion 1 with a first insertion portion 2 formed in it.
Fig. 3 is a front view of a second support portion 3 with a second insertion portion 4 formed in it.
Fig. 4 is a perspective view of the support member 8 having the packed article 6 inserted in it, as viewed from the first support portion 1 side.
Fig. 5 is a perspective view of the support member 8 having the packed article 6 inserted in it, as viewed from the second support portion 3 side.
Fig. 6 is an enlarged sectional view of the support member 8 having the packed article 6 inserted in it, as seen from a side in Fig 5.
Fig. 7 is a side view of support members 8 put around the packed article 6 at both ends.
Fig. 8 is a perspective view, as seen from above, of the support members 8 put around the packed article 6 at both ends stored inside an outer box 9.

### DETAILED DESCRIPTION

An embodiment of the present disclosure will be described below with reference to the accompanying drawings. In the drawings below, a cut line is indicated by a solid line and a folded part is indicated by a broken line.

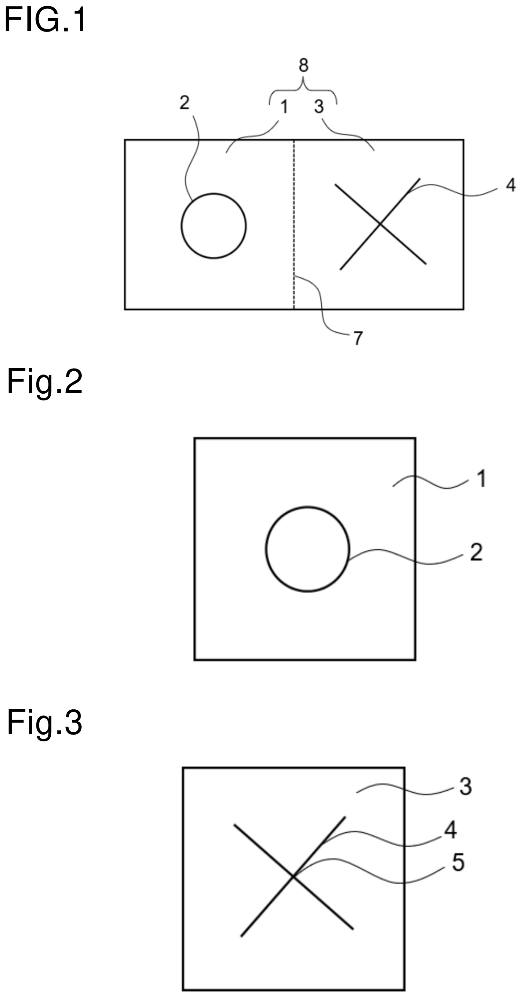

Fig. 1 is a development view of a support member 8 according to an embodiment of the present disclosure. The support member 8 is formed by bending a single sheet member as shown in Fig. 1 along a folded part 7. The support member 8 has a first support portion 1 at one side of the folded part 7 and a second support portion 3 at the other side of it. The first support portion 1 has a first insertion portion 2 formed in it, which is a circular hole. The second support portion 3 has a second insertion portion 4 formed in it, which is configured as a plurality (two in this embodiment) of intersecting linear cuts.

While there is no particular limitation on the manufacturing method of the support member 8; it is preferable to use a single sheet member having a first and a second insertion portion 2 and 4 formed in it as shown in Fig. 1 after being folding along the folded part 7. By using a folded single sheet member improves the holding performance of the support member 8 for a packed article 6 while reducing the number of components; this contributes to reduce the cost and the environmental load.

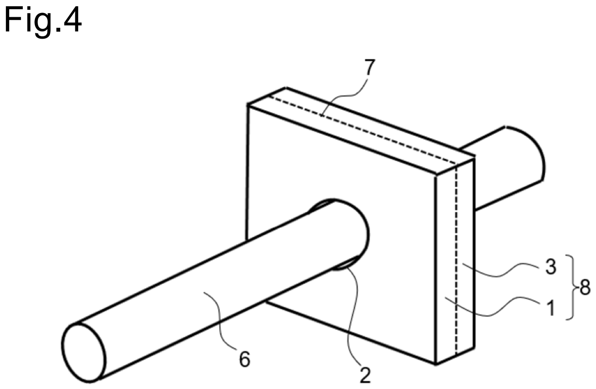

Figs. 2 and 3 are front views of the first and second support portions 1 and 3, respectively, of the support member 8. Fig. 2 shows the first support portion 1 as a part of the support member 8. The first support portion 1 needs to have a first insertion portion 2 formed with an inner diameter equal to or larger than the outer diameter of the packed article 6 (see Fig. 4).

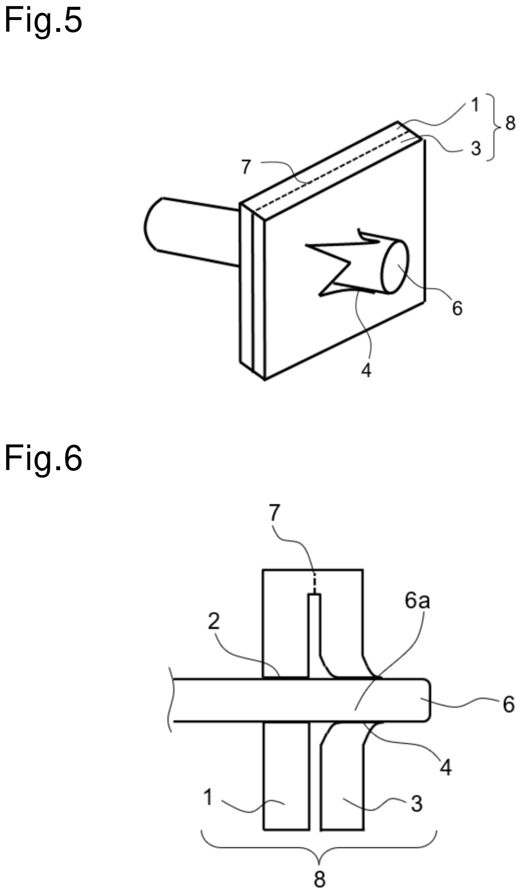

In particular, when a supported portion 6a (see Fig. 6) of the packed article 6 supported by the support member 8 has a circular cross-section, it is preferable that a hole having an inner diameter equal to the outer diameter of the supported portion 6a be formed as the first insertion portion 2. The outer diameter of the supported portion 6a being equal to the inner diameter of the hole in the first insertion portion 2 permits the support member 8 to be fixed to the packed article 6. This helps avoid a drop in holding performance resulting from the support member 8 moving along the longitudinal direction of the packed article 6 during transportation. When the cross section of the supported portion 6a is not circular, it is preferable that the first insertion portion 2 be a hole having the same shape as the cross-sectional shape of the supported portion 6a.

Fig. 3 shows the second support portion 3 as a part of the support member 8. The second support portion 3 needs to have a second insertion portion 4 formed in it, which is configured as two or more intersecting linear cuts, and particularly preferably as two intersecting linear cuts. Two intersecting linear cuts provide an excellent balance of holding performance for the packed article 6 with resistance to breakage of the second support portion 3.

To ease the insertion of the packed article 6 into the second insertion portion 4, it is preferable that the length of the linear cuts in the second insertion portion 4 be larger than the outer diameter of the packed article 6.

Figs. 4 and 5 are perspective views showing the support member 8 put around the packed article 6 from one end of the packed article 6. Fig. 4 is a perspective view of the packed article 6 with the support member 8 put onto it along the longitudinal direction, as viewed from a middle part of the packed article 6. The support member 8 is slid on along the longitudinal direction from one end of the packed article 6, with the first and second support portions 1 and 3 coupled together, and the second support portion 3 is arranged closer to the end of the packed article 6 than the first support portion 1. While the position of the support member 8 is not particularly limited, it is preferable to arrange it one at both ends of the packed article 6 to enhance stability during transportation.

The material of the support member 8 is not particularly limited within the scope conceivable to those skilled in the art; it is preferably a paper material, and particularly preferably a cardboard material. A paper material enhances the holding force of the support member 8 against the packed article 6 when the second support portion 3 is put around the packed article 6, and also helps reduce material cost. It also reduces the environmental load compared to a support member 8 formed of resin.

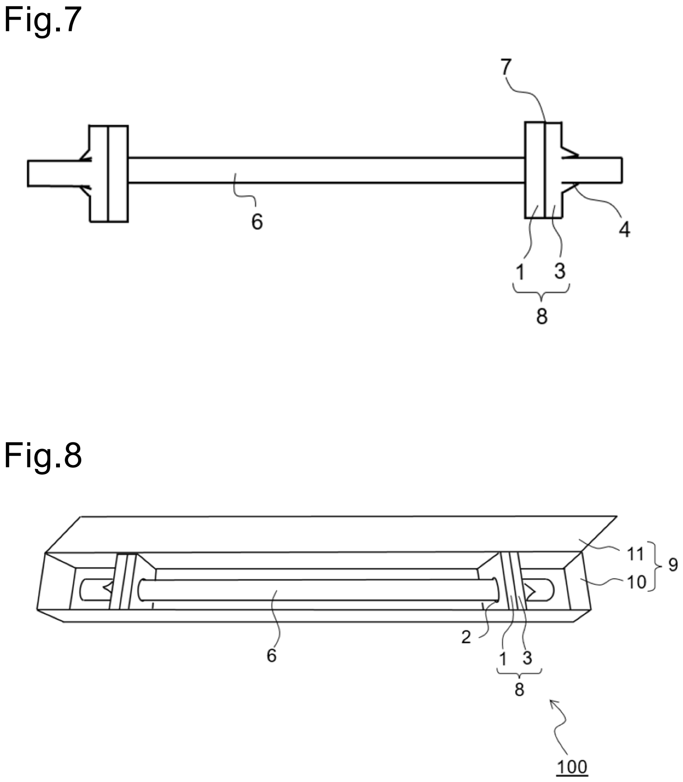

While there is no particular limitation on the shape of the support member 8, it preferably has a rectangular or square shape with a width and height corresponding to the width and height of an outer box 9 (see Fig. 8) used to pack the packed article 6. Using the support member 8 with a shape corresponding to the width and height of the outer box 9 permits the support member 8 having the packed article 6 inserted in it to be appropriately fixed inside the outer box 9. This helps enhance stability during transportation.

Fig. 6 is an enlarged sectional view, as seen from the side, of the second support portion 3 bulging toward an end as a result of the packed article 6 being inserted. When a supported portion 6a of the packed article 6 is inserted through the second support portion 3 at a center portion 5 (see Fig. 3) of the second insertion portion 4, cut parts of the second support portion 3 bulge toward the end of the packed article 6 as shown in Fig. 6. As it bulges, tip parts of the second insertion portion 4 make close contact with the packed article 6, and the second support portion 3 exerts a restoring force; this prevents the support member 8 from moving along the longitudinal direction of the packed article 6 and produces holding force against the packed article 6.

Fig. 7 is a side view of the packed article 6 with the support members 8 put around it one at each of both ends. With this mechanism, the packed article 6 is fixed by the support member 8 inside the outer box 9 (see Fig. 8) and this makes it possible to transport the packed article 6 without being soiled.

Fig. 8 is a perspective view, as seen from above, of the packed article 6 with the support members 8 put around it at both ends and stored inside the outer box 9. The outer box 9 comprises a main body portion 10 in the shape of a rectangular parallelepiped open at its top face and a lid portion 11 pivotably coupled to one edge of the opening of the main body portion 10. The support member 8 and the outer box 9 constitute a packing member 100 for packaging the packed article 6.

For example, in the state shown in Fig. 8, the packed article 6 with the support members 8 put around it at both ends is fixed and stored inside the outer box 9 and this prevents the packed article 6 from slipping out or moving axially. The shape of the outer box 9 is not particularly limited; it may be in the shape of a rectangular parallelepiped as shown in Fig. 8 or in the shape of a cylinder. The material of the outer box 9 may be a paper material, or it may be a material other than paper, such as resin or metal. Or, instead of an outer box 9, a film of resin or the like may be used to cover the packed article 6 with the support members 8 put around it.

The packed article 6 is a bar-shaped member such as a roller member with a rotation shaft.

The present disclosure can be implemented in any manner other than as in the embodiment described above, and allows for any modifications without departure from the spirit of the present disclosure. For example, the shape or size of the first and second insertion portions 2 and 4 may be changed as appropriate according to the shape or size of the packed article 6.

The present disclosure finds applications in support members that are used for transportation of bar-shaped packed articles. Based on the present disclosure, it is possible to provide a very stable support member that can be used generally for various packed articles, and to provide a packing member provided with such a support member.

## Claims

1. A support member (8) for supporting a bar-shaped packed article (6), comprising:
a first support portion (1) arranged adjacent to the packed article (6) in a longitudinal direction thereof; and
a second support portion (3),
**characterized in that**
the first support portion (1) has a first insertion portion (2) formed therein configured as a hole with an inner diameter equal to or larger than an outer diameter of the packed article (6), and
the second support portion (3) is arranged closer to an end of the packed article (6) than the first support portion (1) and has a second insertion portion (4) formed therein configured as two or more intersecting linear cuts.

2. The support member (8) according to claim 1, **characterized in that**
the packed article (6) has, at least in a supported portion (6a) thereof supported by the support member (8), a circular cross-section, and
the first support portion (1) is configured as a hole with an inner diameter equal to an outer diameter of the supported portion.

3. The support member (8) according to claim 1, **characterized in that**
the support member (8) is formed by bending a single sheet member.

4. The support member (8) according to claim 1, **characterized in that**
the packed article (6) is a roller member with a rotation shaft.

5. A packing member (100) comprising:
an outer box (9) that houses a bar-shaped packed article (6); and
the support member (8) according to any one of claims 1 or 4 that supports the packed article (6) at least at both end parts thereof.

6. The packing member (100) according to claim 5, **characterized in that**
a plurality of the support members (8) are arranged along a longitudinal direction of the packed article (6).
